# EUROPEAN PATENT APPLICATION

(11) **EP 4 674 397 A1**
(43) Date of publication of application: **07.01.2026**
(21) Application number: 23924692.9
(22) Date of filing: 02.03.2023
(51) Int. Cl.: A61G 5/10, B62D 17/00

(54) **FIXING BASE DEVICE FOR ADJUSTING REAR WHEEL OF WHEELCHAIR**

(71) Applicant: MBL (Xiamen) Co., Ltd, Xiamen, Fujian 361022 (CN)
(72) Inventor: GROSTOL NIELSEN, Niels, Xiamen, Fujian 361022 (CN)
(74) Representative: Hofmann, Andreas
(86) International application number: PCT/CN2023/079353
(87) International publication number: WO 2024/178725

(57) **Abstract**

The present invention provides a fastening base device for adjusting rear wheels of a wheelchair, including a frame, rear wheels, rear wheel axles, and an angle adjustment mechanism, where the angle adjustment mechanism is fastened to the frame. The angle adjustment mechanism includes a fastening base, the fastening base includes a fastening block and a bushing, the fastening block includes an upper pressed block and a lower pressed block that are engaged and locked vertically, a fastening hole is provided between the upper pressed block and the lower pressed block, one end of the bushing is movably inserted into the fastening hole, and the other end is connected to the rear wheel axle, and the rear wheel axle is connected to the rear wheel. An arc-shaped bushing swings along the fastening hole in an arc, to drive the rear wheels to rotate in an arc, thereby quickly adjusting an inclination angle of the rear wheels relative to the ground.

## Description

### TECHNICAL FIELD

The present invention belongs to the technical field of wheelchairs, and in particular to a fastening base device for adjusting rear wheels of a wheelchair.

### BACKGROUND TECHNOLOGY

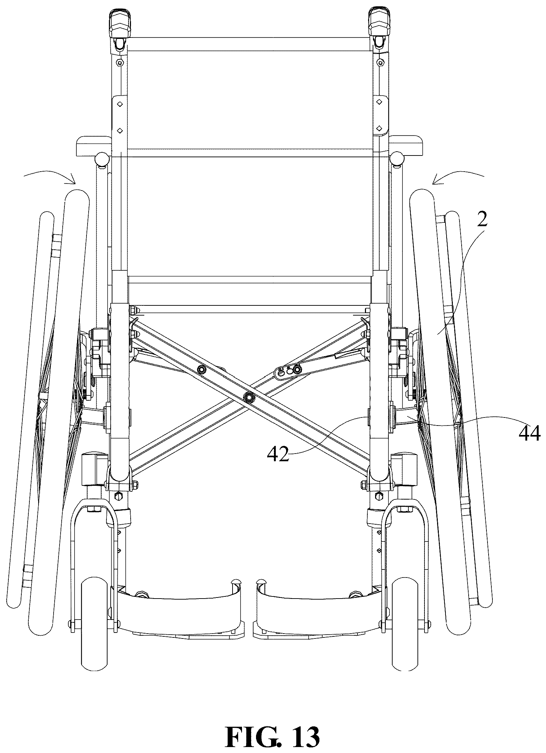

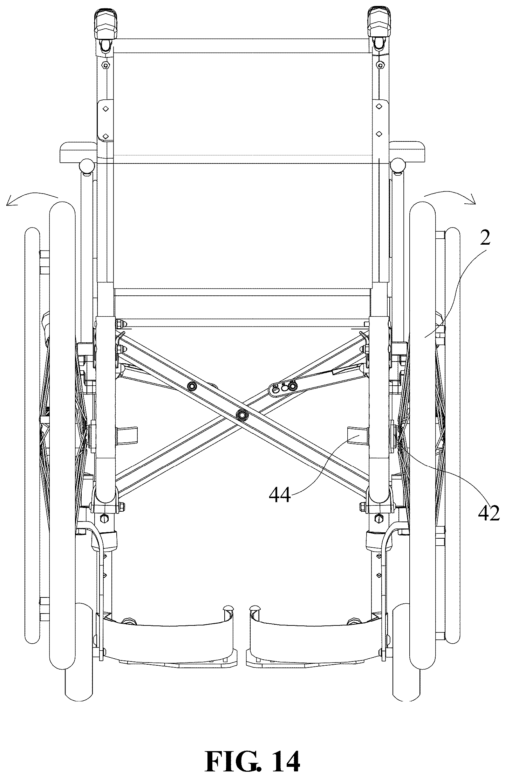

Currently, a manual wheelchair commonly available on the market for disabled and elderly persons mainly includes a frame, and footrests, armrests, handles, a backrest, a seat cushion, a pair of front universal wheels, and a pair of rear wheels respectively disposed on the frame. The pair of rear wheels are directly installed on the frame through respective wheel axles, and the pair of rear wheels are vertically arranged with respect to the ground, which is specifically shown in FIG. 14. This structure is a conventional design for wheelchairs, which, however, has some drawbacks. For example, the wheelchair has a large contact area during movement, which makes propulsion more labor-intensive. In particular, when going uphill, the wheelchair not only requires greater effort but also tends to become unstable, resulting in shaking, wobbling, and the like. In addition, when the manual wheelchair is used to pass through a narrow doorway, a user's hand can easily get pinched between rear wheels and a door. Therefore, it is necessary to adjust an inclination angle of the wheelchair relative to the ground, so that the rear wheels tilt downward toward the inside of the wheelchair, as shown in FIG. 13, so that the above problem can be resolved.

Based on the above issues, it is necessary to adjust the inclination angle of the rear wheels. However, existing wheelchairs usually do not have a mechanism for adjusting the rear wheels. Even if such an adjustment mechanism is provided, the adjustment mechanism is usually complex and lacks flexibility.

### DISCLOSURE OF THE INVENTION

### Technical Problem

To address the shortcomings of existing wheelchairs where a rear wheel angle cannot be adjusted or can be adjusted not simply and not quickly, the present invention is intended to provide a fastening base device for adjusting rear wheels of a wheelchair, thereby enabling quick adjustment of a rear wheel inclination angle with reduced time and effort, and improving user convenience.

### Technical Solutions

To achieve the above purpose, solutions of the present invention are as follows: a fastening base device for adjusting rear wheels of a wheelchair, including: a frame, rear wheels, rear wheel axles, and an angle adjustment mechanism, where the frame includes rear support tubes located on a rear side of the wheelchair, and the angle adjustment mechanism is fastened to the rear support tubes;
the angle adjustment mechanism includes a fastening base, the fastening base includes a fastening block and a bushing, the fastening block includes an upper pressed block and a lower pressed block, the upper pressed block and the lower pressed block are engaged and locked vertically, a fastening hole is provided between middle portions of the upper pressed block and the lower pressed block, one end of the bushing passes through the fastening hole and moves within the fastening hole, while the other end of the bushing is connected to one end of the rear wheel axle, and the other end of the rear wheel axle is connected to the rear wheel; and the bushing is arc-shaped and swings along the fastening hole in an arc to drive the rear wheel to rotate in an arc.

Further, the fastening base device for adjusting rear wheels of a wheelchair includes a parallelism adjustment mechanism, where the parallelism adjustment mechanism includes an adjusting shim, the adjusting shim is disposed between the fastening base and the rear support tube, a cross-section of the adjusting shim is arc-shaped, and a width of the cross-section gradually increases from one end to the other end, an inner arc surface of the adjusting shim matches an outer arc surface of the rear support tube, the outer arc surface abuts against the fastening base, and when the adjusting shim rotates about an axis of the rear support tube, the adjusting shim pushes the fastening base to shift, thereby driving the rear wheel to deflect.

Further, two rear support tubes are provided on each side of the wheelchair, both ends of the fastening base are respectively fastened to the two rear support tubes on one side of the wheelchair, the adjusting shim is disposed between one end of the fastening base and the rear support tube, and one end of the fastening base is provided with an arc-shaped groove matching the outer arc surface of the adjusting shim.

Further, the fastening base device for adjusting rear wheels of a wheelchair includes bolts and nuts, where the fastening base, the rear support tubes, and the adjusting shim are fastenedly connected by the bolts and nuts, a plurality of height adjusting holes are spaced apart in the rear support tube, through holes are provided at both ends of the fastening base, an arc-shaped hole is provided in the middle of the adjusting shim along an arc direction, the bolt sequentially passes through the through hole, the arc-shaped hole, and the height adjusting hole, then is threaded with the nut, and the adjusting shim rotates about the axis of the rear support tube to allow the bolt to move relatively within the arc-shaped hole.

Further, the fastening base device for adjusting rear wheels of a wheelchair includes a position adjustment mechanism, where the position adjustment mechanism includes a connecting plate, both ends of the connecting plate are respectively fastened to the two rear support tubes on one side of the wheelchair, a rectangular hole is provided in the middle of the connecting plate, and the fastening block has a rectangular a cross-section and is slidably disposed within the rectangular hole.

Further, the fastening base includes a cover plate, left stepped grooves are provided at the top and bottom of a right side of the fastening block respectively, right stepped grooves are provided at the top and bottom of the cover plate respectively, the cover plate is placed on the right side of the fastening block, so that the left stepped grooves and the right stepped grooves together form sliding grooves, an upper side of the rectangular hole serves as an upper slide rail, a lower side of the rectangular hole serves as a lower slide rail, and the upper slide rail and the lower slide rail are engaged in the sliding grooves respectively.

Further, the bushing is an arc-shaped bushing with a downwardly concave middle portion, an upper surface of the fastening hole is a downwardly concave arc surface, and a lower surface of the fastening hole is a plane or an arc surface parallel to the upper surface.

Further, a linear channel is provided inside the bushing, one end of the rear wheel axle is inserted into the linear channel and detachably connected to the bushing, and the other end is connected to a hub of the rear wheel.

Further, the fastening base includes a locking member, and the upper pressed block and the lower pressed block are locked by the locking member.

Further, the upper pressed block and the lower pressed block are both U-shaped, and the upper pressed block and the lower pressed block are engaged vertically to form a fastening hole in the middle of the fastening block, through holes are provided at both ends of the upper pressed block, positioning grooves are formed at the bottom of both ends of the upper pressed block, and the positioning grooves communicate with the through holes; positioning protrusions are upwardly provided at both ends of the lower pressed block, threaded holes are formed inside the positioning protrusions, and the positioning grooves and the positioning protrusions are engaged to allow the upper pressed block and the lower pressed block to be engaged vertically; and the locking member is a locking bolt, and the locking bolt passes through the through hole and is screwed into the threaded hole.

### Beneficial Effects

After the above solutions are used, beneficial effects of the present invention are as follows: In the present invention, the angle adjustment mechanism is provided on the rear support tube to adjust the inclination angle of the rear wheel relative to the ground. When the upper pressed block and the lower pressed block are engaged vertically, the fastening hole is formed between middle portions of the upper pressed block and the lower pressed block for the bushing to pass through. Because the bushing is arc-shaped, the bushing swings along the fastening hole in an arc during movement in the fastening hole, thereby driving the rear wheel to rotate in an arc and causing the rear wheel to tilt, achieving the purpose of adjusting the rear wheel angle. In the present invention, the inclination angle of the rear wheel can be adjusted rapidly through an adjustment base, saving time and effort. Once the rear wheel is tilted, the wheelchair is manually driven more easily and travels more stably with reduced time and labor and without pinching the hand. Moreover, in the present invention, the inclination angle of the rear wheel is adjusted by moving the bushing, so that the bushing can move any distance within a movement range, thereby achieving stepless and more flexible adjustment.

### BRIEF DESCRIPTION OF THE DRAWINGS

- FIG. 1: is a schematic diagram of a perspective structure of an adjusting shim placed on a fastening base according to the present invention;
- FIG. 2: is a sectional view showing one end of a bushing moved into a fastening hole according to the present invention;
- FIG. 3: is a sectional view showing the other end of the bushing moved into the fastening hole according to the present invention;
- FIG. 4: is a sectional view of the adjusting shim according to the present invention;
- FIG. 5: is a front view showing one end of the adjusting shim placed on the fastening base according to the present invention;
- FIG. 6: is a front view showing the other end of the adjusting shim placed on the fastening base according to the present invention;
- FIG. 7: is an exploded view of the fastening base according to the present invention;
- FIG. 8: is an exploded view of parts according to the present invention;
- FIG. 9: is a schematic structural diagram of the fastening base and the adjusting shim installed on a rear support tube according to the present invention;
- FIG. 10: is an exploded view of a rear wheel axle according to the present invention;
- FIG. 11: is a top view showing a rear wheel of a wheelchair in an outwardly deflected state;
- FIG. 12: is a top view showing the rear wheel of the wheelchair in a parallel state;
- FIG. 13: is a rear view showing the rear wheel of the wheelchair in an inclined state relative to the ground; and
- FIG. 14: is a rear view showing the rear wheel of the wheelchair in a vertical state relative to the ground.

### Reference signs:

- 1: frame
- 11: rear support tube
- 111: height adjusting hole
- 2: rear wheel
- 3: rear wheel axle
- 31: locking ball
- 32: control button
- 4: fastening base
- 41: bolt fastening hole
- 42: fastening block
- 421: upper pressed block
- 422: lower pressed block
- 423: left stepped groove
- 424: positioning groove
- 425: positioning protrusion
- 426: threaded hole
- 427: through hole
- 428: fastening hole
- 43: connecting plate
- 431: rectangular hole
- 44: bushing
- 441: linear channel
- 45: locking bolt
- 46: cover plate
- 461: right stepped groove
- 5: adjusting shim
- 51: arc-shaped hole
- 52: inner arc surface
- 53: outer arc surface
- 54: arc-shaped groove

### PREFERRED EMBODIMENTS OF THE PRESENT INVENTION

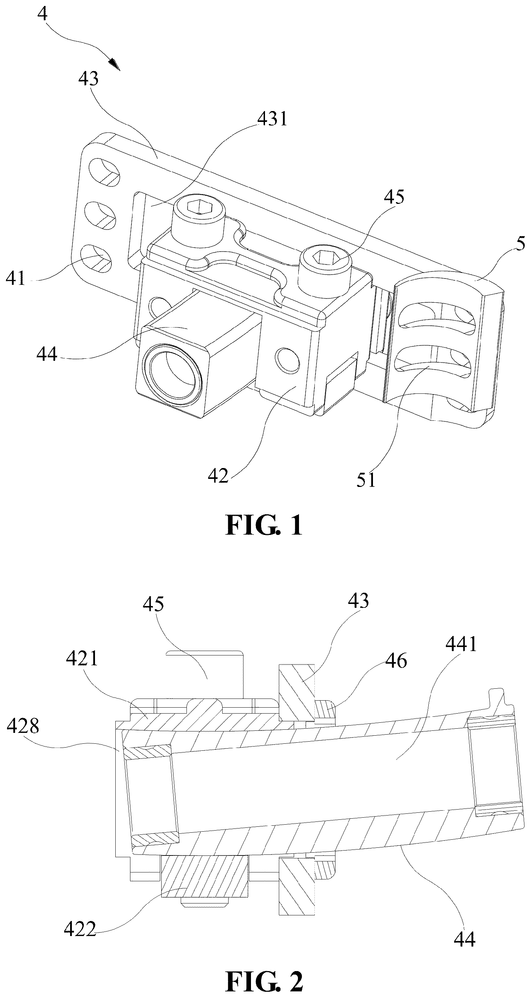

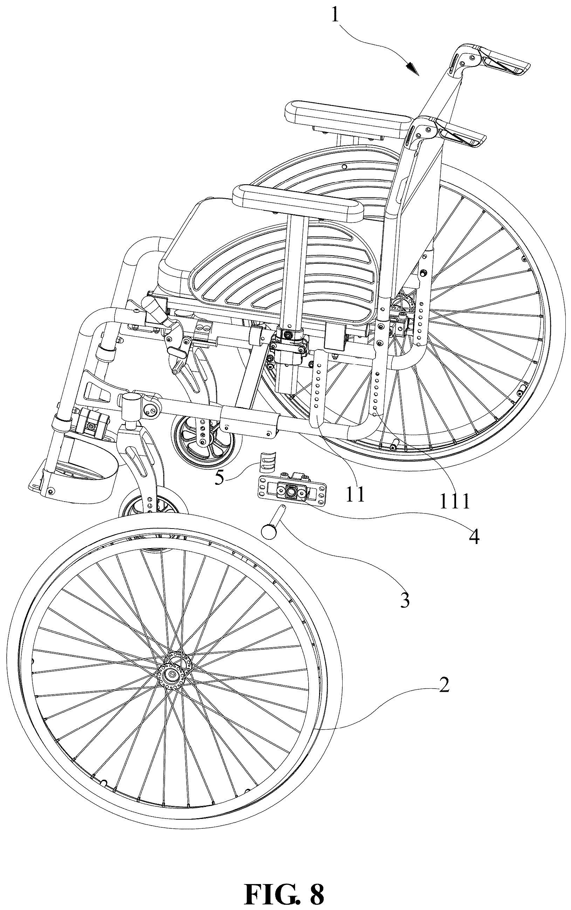

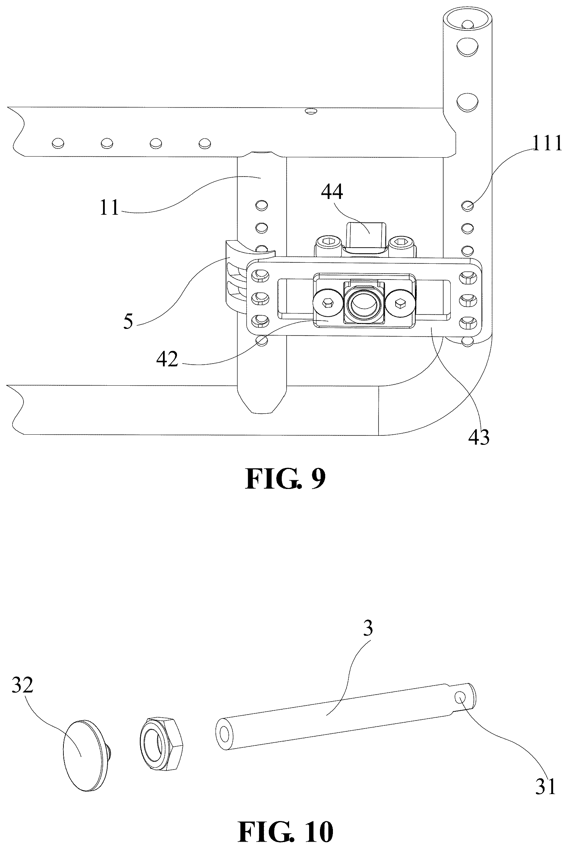

The present invention provides a fastening base device for adjusting rear wheels of a wheelchair, as shown in FIG. 8 and FIG. 9, including a frame 11, rear wheels 22, rear wheel axles 33, and an angle adjustment mechanism. The frame 11 includes rear support tubes 11 located on a rear side of the wheelchair, and the angle adjustment mechanism is fastened to the rear support tubes 11. As shown in FIG. 1 to FIG. 3, the angle adjustment mechanism includes a fastening base 4. The fastening base 4 includes a fastening block 42, a bushing 44, and a locking bolt 45. The fastening block 42 includes an upper pressed block 421 and a lower pressed block 422, and the upper pressed block 421 and the lower pressed block 422 are engaged and locked vertically. A fastening hole 428 is provided between middle portions of the upper pressed block 421 and the lower pressed block 422. One end of the bushing 44 passes through the fastening hole 428 and can move within the fastening hole 428, while the other end is connected to one end of the rear wheel axle 3, and the other end of the rear wheel axle 3 is connected to the rear wheel 2. The bushing 44 is arc-shaped, and when moving within the fastening hole 428, the bushing 44 swings along the fastening hole 428 in an arc, thereby driving the rear wheel 2 to rotate in an arc and causing the rear wheel 2 to tilt relative to the ground, achieving the purpose of adjusting an angle of the rear wheel 2. The upper pressed block 421 and the lower pressed block 422 can be locked and fastened by a locking member, the locking member presses the upper pressed block 421 and the lower pressed block 422 inward to lock the bushing 44. When it is necessary to adjust the angle of the rear wheel 2, the locking member is unlocked to release the bushing 44, and the bushing 44 is then moved to adjust the angle of the rear wheel 2. After adjustment, the locking member is used to lock the bushing 44, ensuring a firm connection between the rear wheel 2 and the frame 1 and more stable movement.

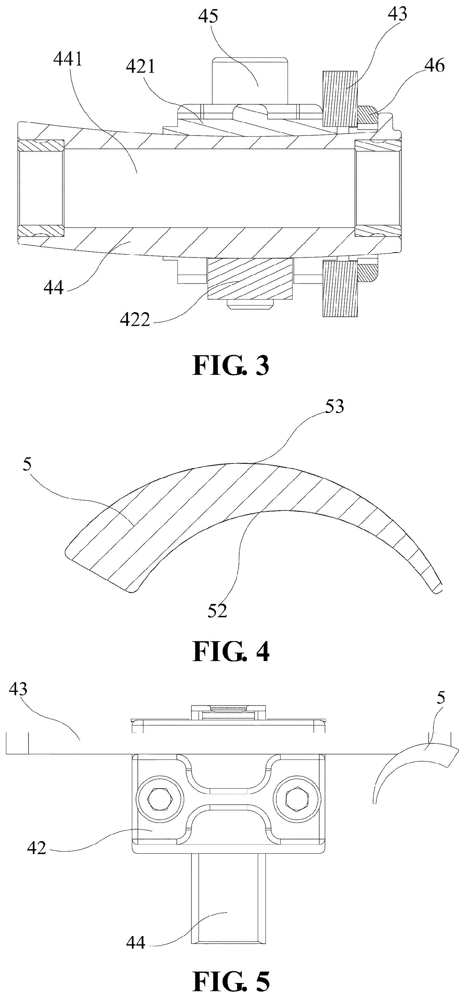

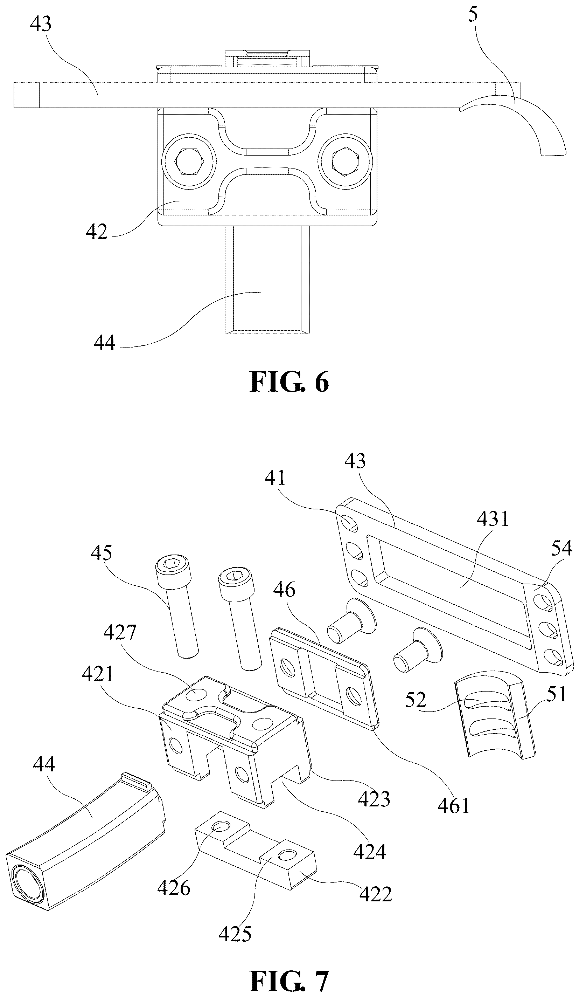

As shown in FIG. 7, the bushing 44 is an arc-shaped bushing 44 with a downwardly concave middle portion. As shown in FIG. 2 and FIG. 3, an upper surface of the fastening hole 428 is a downwardly concave arc surface, allowing an upper surface of the bushing 44 to slide along the upper surface of the fastening hole 428, thereby enabling arc-shaped swinging of the bushing 44. An arc-shaped swinging effect of the bushing 44 can be achieved solely by the upper surface of the fastening hole 428, while a lower surface of the fastening hole 428 may be designed as a flat surface other than an arc surface to reduce production costs, or may be designed as an arc surface parallel to the upper surface.

As shown in FIG. 2 and FIG. 3, a linear channel 441 is provided inside the bushing 44. One end of the rear wheel axle 3 is inserted into the linear channel 441 and connected to the bushing 44, while the other end of the rear wheel axle 3 is connected to a wheel hub of the rear wheel 2. As shown in FIG. 3, when the other end of the bushing 44 is located within the fastening hole 428, the linear channel 441 is parallel to the ground. If the rear wheel axle 3 is connected to the bushing 44, the rear wheel 2 is in a vertical state relative to the ground, as specifically shown in FIG. 14. In this case, the two rear wheels 2 are parallel to each other, which is the conventional design. If the bushing 44 is moved to the right along the fastening hole 428, the bushing 44 swings in an arc to the right, and the linear channel 441 inside the bushing 44 tilts upward to form a specific angle with the ground, simultaneously causing the rear wheel 2 to tilt downward toward the inside of the wheelchair. As shown in FIG. 2, when one end of the bushing 44 is moved into the fastening hole 428, an angle formed between the linear through hole 427 and the ground is an inclination angle of the wheelchair, and this is a limit position for angle adjustment. An adjustment range of the present invention can be 0 to 5°, but is not limited thereto and may be adjusted according to the specific use of the wheelchair. Further, the bushing 44 can move any distance within a movement range, allowing stepless and more flexible adjustment.

As shown in FIG. 7, the locking member may be a locking bolt 45, both ends of the upper pressed block 421 are provided with through holes 427, and both ends of the lower pressed block 422 are provided with threaded holes 426. The locking bolt 45 passes through the through hole 427 and is screwed into the threaded hole 426. The locking bolt 45 is turned, so that the bushing 44 can be locked or unlocked. Of course, other locking members such as bolts and nuts may also be used to lock and fasten the upper pressed block 421 and the lower pressed block 422, but a nut is not required when the locking bolt 45 is used, which is used more easily.

As shown in FIG. 7, the upper pressed block 421 and the lower pressed block 422 are both U-shaped. The upper pressed block 421 and the lower pressed block 422 are engaged vertically, forming a fastening hole 428 in the middle of the fastening block 42. The fastening hole 428 may be rectangular or other shapes, which is specifically determined based on a cross-sectional shape of the bushing 44. Positioning grooves 424 are provided at the bottom of both ends of the upper pressed block 421, and the positioning grooves 424 communicate with the through holes 427. Positioning protrusions 425 are provided upwardly at both ends of the lower pressed block 422, and threaded holes 426 are formed within the positioning protrusions 425. The positioning grooves 424 and the positioning protrusions 425 are engaged to allow the upper pressed block 421 and the lower pressed block 422 to be engaged vertically. The positioning grooves 424 and the positioning protrusions 425 also serve a positioning function, enabling quick connection and engagement between the upper pressed block 421 and the lower pressed block 422 during installation, as well as vertical communication between the through holes 427 and the threaded holes 426.

With particular reference to FIG. 4 and FIG. 9, the present invention is also provided with a parallelism adjustment mechanism. The parallelism adjustment mechanism includes an adjusting shim 5. The adjusting shim 5 is disposed between the fastening base 4 and the rear support tube 11. A cross-section of the adjusting shim 5 is arc-shaped, and a width of the cross-section gradually increases from one end to the other, that is, a thickness of the adjusting shim 5 gradually increases from one end to the other. An inner arc surface 52 of the adjusting shim 5 matches an outer arc surface of the rear support tube 11, enabling the adjusting shim 5 to be closely fitted on the outer peripheral surface of the rear support tube 11 and to rotate about an axis of the rear support tube 11. An outer arc surface 53 of the adjusting shim 5 abuts against the fastening base 4. When the adjusting shim 5 rotates about the axis of the rear support tube 11, a thickness of the adjusting shim 5 between the fastening base 4 and the rear support tube 11 changes, causing the fastening base 4 to shift, thereby causing the rear wheel 2 to deflect relative to the wheelchair, thus allowing adjustment of the parallelism between the rear wheel 2 and the frame of the wheelchair.

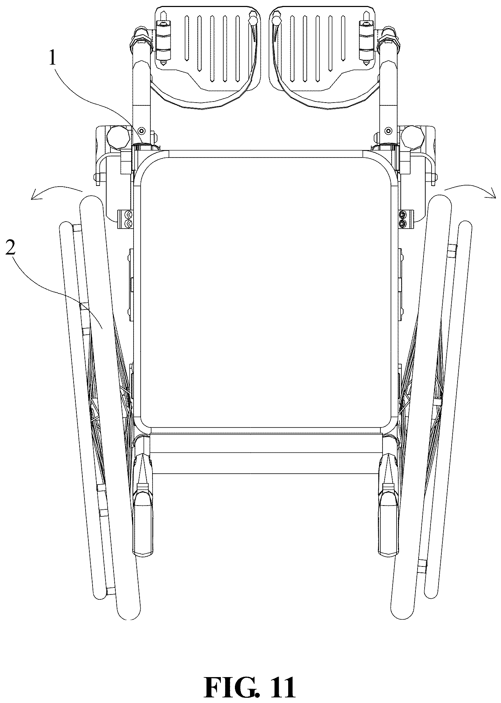

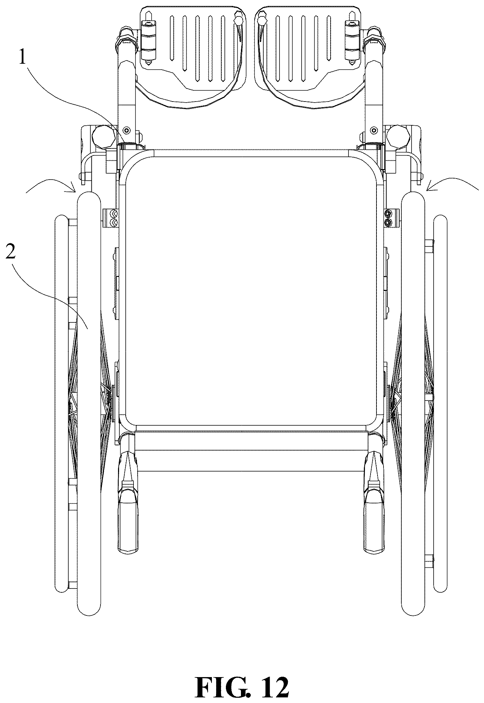

As shown in FIG. 8, two rear support tubes 11 are provided on each side of the wheelchair. Both ends of the fastening base 4 are respectively fastened to the two rear support tubes 11 on each side of the wheelchair. The adjusting shim 5 is disposed between one end of the fastening base 4 and the rear support tube 11. When the adjusting shim 5 is rotated, one end of the fastening base 4 deflects relative to the other end. To ensure that both outward or inward deflection of the rear wheel 2 can be adjusted back to an original parallel state, a middle part of the adjusting shim 5 can be positioned between the rear support tube 11 and the fastening base 4, so that the rear wheel 2 is in a parallel state, namely, the original state. When the rear wheel 2 deflects outward as shown in FIG. 11, the adjusting shim 5 can be rotated, so that a thin end of the adjusting shim 5 moves between the rear support tube 11 and the fastening base 4, as shown in FIG. 6 or FIG. 9. A distance between one end of the fastening base 4 and the rear support tube 11 decreases, causing the end of the fastening base 4 to deflect inward, compensating for an outward deflection angle of the rear wheel 2 and returning the rear wheel 2 to the parallel state shown in FIG. 12. Similarly, when the rear wheel 2 deflects inward, as shown in FIG. 5, rotating the adjusting shim 5 to enable the thick end of the adjusting shim 5 to move between the rear support tube 11 and the fastening base 4 can restore the rear wheel 2 to the original parallel state. This adjustment operation is simple and fast, thereby achieving stepless and more flexible adjustment, and facilitating use. Further, in a preferred embodiment and as shown in FIG. 7, an arc-shaped groove 54 matching the outer arc surface 53 of the adjusting shim 5 may be provided at one end of the fastening base 4, so that the adjusting shim 5 rotates more smoothly and is adjusted more easily and rapidly.

With particular reference to FIG. 1 and FIG. 9, the fastening base 4, the rear support tubes 11, and the adjusting shim 5 are fastenedly connected by bolts and nuts, which are not limited thereto, and may alternatively be connected by other fasteners. In this embodiment, bolt fastening holes 41 are provided at both ends of the fastening base 4, and an arc-shaped hole 51 for bolt passage is provided in the middle of the adjusting shim 5 along an arc direction. A plurality of height adjusting holes 111 are spaced apart on the rear support tube 11. The bolt sequentially passes through the bolt fastening hole 41, the arc-shaped hole 51, and the height adjusting hole 111, and then is threaded with the nut to fasten the bolt fastening hole 41, the arc-shaped hole 51, and the height adjusting hole 111. When parallelism of the rear wheel 2 needs to be adjusted, loosening the nut allows the adjusting shim 5 to be rotated for adjustment. After adjustment, the nut is tightened to securely press and fasten the adjusting shim 5 and the fastening base 4, ensuring stable connection and simple adjustment. The arc-shaped hole 51 is relatively long, allowing sufficient movement of the bolt within the arc-shaped hole 51 during rotation of the adjusting shim 5. A movement range of the bolt is limited to be within the arc-shaped hole 51, so the arc-shaped hole 51 also has a limiting function to prevent the adjusting shim 5 from rotating out from between the rear support tube 11 and the fastening base 4. Additionally, the fastening base 4 and the adjusting shim 5 can be fastened to height adjusting holes 111 at different heights, thereby allowing adjustment of a height of the wheelchair relative to the rear wheel 2.

As shown in FIG. 1 and FIG. 7, the present invention is further provided with a position adjustment mechanism. The position adjustment mechanism includes a connecting plate 43. Bolt fastening holes 41 are provided at both ends of the connecting plate 43 and fastened to the rear support tubes 11. The fastening base 4 is fastened to the rear support tube 11 through the connecting plate 43. A rectangular hole 431 is provided in the middle of the connecting plate 43, and the fastening block 42 has a rectangular cross-section and is slidably disposed within the rectangular hole 431. The wheelchair frame 1 can be moved forward or backward relative to the rear wheel 2 through the fastening block 42, thereby adjusting a position of the rear wheel 2 in a front-rear direction of the frame 1. Front-rear positions of the rear wheel 2 and the frame 1 are conventionally adjusted in the following method: a plurality of connection holes are provided at intervals in a support tube connecting the frame 1 and the rear wheel axle 3. The rear wheel axle 3 passes through the holes and is fastened to the support tube. When the front-rear positions of the rear wheel 2 and the frame 1 are adjusted respectively, the rear wheel axle 3 needs to connected to other holes, which requires the rear wheel axle 3 to be repeatedly disassembled and reconnected, is a stepped adjustment, and lacks flexibility. In contrast, the present invention allows direct adjustment of the front-rear positions of the frame 1 and the rear wheel 2 by sliding the fastening block 42, enabling fast and simple adjustment, achieving stepless and extremely flexible adjustment.

As shown in FIG. 7, to facilitate sliding installation of the fastening block 42 onto the connecting plate 43, a cover plate 46 is provided on a right side of the fastening block 42. Left stepped grooves 423 are formed at the top and bottom of the right side of the fastening block 42 respectively, and a corresponding right stepped groove 461 is formed at the top and bottom of the cover plate 46. The cover plate 46 is placed on the right side of the fastening block 42, so that the left stepped grooves 423 and the right stepped grooves 461 together form sliding grooves respectively. An upper side of the rectangular hole 431 serves as an upper slide rail, and a lower side of the rectangular hole 431 serves as a lower slide rail. The upper slide rail and the lower slide rail are engaged in the sliding groove, allowing the sliding groove to move relative to the upper slide rail and the lower slide rail, thereby adjusting the front-rear positions of the frame 1 and rear wheel 2. During installation of the fastening block 42 and the connecting plate 43, the connecting plate 43 can first be installed on the right side of the fastening block 42, and the upper slide rail and the lower slide rail are engaged in the left stepped grooves 423. Then, the cover plate 46 is placed on the right side of the fastening block 42, so that the left stepped grooves 423 and right stepped grooves 461 together form the sliding grooves to clamp the connecting plate 43. Finally, the cover plate 46 and the fastening block 42 are fastened by a bolt to complete installation.

In summary, the present invention is provided with three adjustment mechanisms: the angle adjustment mechanism, the parallelism adjustment mechanism, and the position adjustment mechanism, which can respectively adjust the inclination angle between the rear wheel 2 and the ground, the parallelism between the rear wheel 2 and the side frame of the frame 1, and the front-rear positions of the rear wheel 2 and the frame 1, thereby achieving stepless, rapid, and flexible adjustment. Further, in the present invention, the height of the wheelchair relative to the rear wheel 2 can also be adjusted, providing a total of four different adjustment functions. Adjustment operations are simple, time-saving, labor-saving, and convenient for users.

As shown in FIG. 10, the present invention is also provided with a quick-release structure for rapid disassembly of the rear wheel 2. Specifically, one end of the rear wheel axle 3 is provided with a locking ball 31 that extends and retracts radially along the rear wheel axle 3. The other end of the rear wheel axle 3 is provided with a control button 32 for controlling the extension and retraction of the locking ball 31. A step wall (not shown in the figure) may be provided inside the bushing 44 for the locking ball 31 to abut against. An initial state of the locking ball 31 is radially extended from the rear wheel axle 3. One end of the bushing 44 passes through the fastening hole and is fastened to the fastening block 42, while the other end abuts against a hub of the rear wheel 2. One end of the rear wheel axle 3 is inserted from the other end of the bushing 44, so that the locking ball 31 abuts against the step wall. The other end of the rear wheel axle 3 passes through the hub of the rear wheel 2 and is connected to the rear wheel 2, thereby fastening the rear wheel axle 3 and bushing 44. The control button 32 is pressed to control the locking ball 31 to retract radially along a wheel diameter of the rear wheel 2, causing the locking ball 31 to disengage from the step wall. Continuous pressing the control button 32 allows the rear wheel axle 3 to be pulled out from the bushing 44, enabling quick removal of the rear wheel 2 for simple replacement and maintenance.

The above descriptions are merely preferred embodiments of the present invention and are not intended to limit the design of this case. Any equivalent changes made based on key design features of this case shall fall within the protection scope of this case.

## Claims

1. A fastening base device for adjusting rear wheels of a wheelchair, comprising: a frame, rear wheels, rear wheel axles, and an angle adjustment mechanism, wherein the frame comprises rear support tubes located on a rear side of the wheelchair, and the angle adjustment mechanism is fastened to the rear support tubes; the angle adjustment mechanism comprises a fastening base, the fastening base comprises a fastening block and a bushing, the fastening block comprises an upper pressed block and a lower pressed block, the upper pressed block and the lower pressed block are engaged and locked vertically, a fastening hole is provided between middle portions of the upper pressed block and the lower pressed block, one end of the bushing passes through the fastening hole and moves within the fastening hole, while the other end of the bushing is connected to one end of the rear wheel axle, and the other end of the rear wheel axle is connected to the rear wheel; and the bushing is arc-shaped and swings along the fastening hole in an arc to drive the rear wheel to rotate in an arc.

2. The fastening base device for adjusting rear wheels of a wheelchair according to claim 1, further comprising a parallelism adjustment mechanism, wherein the parallelism adjustment mechanism comprises an adjusting shim, the adjusting shim is disposed between the fastening base and the rear support tube, a cross-section of the adjusting shim is arc-shaped, and a width of the cross-section gradually increases from one end to the other, an inner arc surface of the adjusting shim matches an outer arc surface of the rear support tube, the outer arc surface abuts against the fastening base, and when the adjusting shim rotates about an axis of the rear support tube, the adjusting shim pushes the fastening base to shift, thereby driving the rear wheel to deflect.

3. The fastening base device for adjusting rear wheels of a wheelchair according to claim 2, wherein two rear support tubes are provided on each side of the wheelchair, both ends of the fastening base are respectively fastened to the two rear support tubes on one side of the wheelchair, the adjusting shim is disposed between one end of the fastening base and the rear support tube, and one end of the fastening base is provided with an arc-shaped groove matching the outer arc surface of the adjusting shim.

4. The fastening base device for adjusting rear wheels of a wheelchair according to claim 3, further comprising bolts and nuts, wherein the fastening base, the rear support tubes, and the adjusting shim are fastenedly connected by the bolts and nuts, a plurality of height adjusting holes are spaced apart in the rear support tube, through holes are provided at both ends of the fastening base, an arc-shaped hole is provided in the middle of the adjusting shim along an arc direction, the bolt sequentially passes through the through hole, the arc-shaped hole, and the height adjusting hole, then is threaded with the nut, and the adjusting shim rotates about the axis of the rear support tube to allow the bolt to move relatively within the arc-shaped hole.

5. The fastening base device for adjusting rear wheels of a wheelchair according to claim 3, further comprising a position adjustment mechanism, wherein the position adjustment mechanism comprises a connecting plate, both ends of the connecting plate are respectively fastened to the two rear support tubes on one side of the wheelchair, a rectangular hole is provided in the middle of the connecting plate, and the fastening block has a rectangular a cross-section and is slidably disposed within the rectangular hole.

6. The fastening base device for adjusting rear wheels of a wheelchair according to claim 5, wherein the fastening base further comprises a cover plate, left stepped grooves are provided at the top and bottom of a right side of the fastening block respectively, right stepped grooves are provided at the top and bottom of the cover plate respectively, the cover plate is placed on the right side of the fastening block, so that the left stepped grooves and the right stepped grooves together form sliding grooves, an upper side of the rectangular hole serves as an upper slide rail, a lower side of the rectangular hole serves as a lower slide rail, and the upper slide rail and the lower slide rail are engaged in the sliding grooves respectively.

7. The fastening base device for adjusting rear wheels of a wheelchair according to claim 1, wherein the bushing is an arc-shaped bushing with a downwardly concave middle portion, an upper surface of the fastening hole is a downwardly concave arc surface, and a lower surface of the fastening hole is a plane or an arc surface parallel to the upper surface.

8. The fastening base device for adjusting rear wheels of a wheelchair according to claim 1, wherein a linear channel is provided inside the bushing, one end of the rear wheel axle is inserted into the linear channel and detachably connected to the bushing, and the other end is connected to a hub of the rear wheel.

9. The fastening base device for adjusting rear wheels of a wheelchair according to claim 1, wherein the fastening base further comprises a locking member, and the upper pressed block and the lower pressed block are locked by the locking member.

10. The fastening base device for adjusting rear wheels of a wheelchair according to claim 9, the upper pressed block and the lower pressed block are both U-shaped, and the upper pressed block and the lower pressed block are engaged vertically to form a fastening hole in the middle of the fastening block, through holes are provided at both ends of the upper pressed block, positioning grooves are formed at the bottom of both ends of the upper pressed block, and the positioning grooves communicate with the through holes; positioning protrusions are upwardly provided at both ends of the lower pressed block, threaded holes are formed inside the positioning protrusions, and the positioning grooves and the positioning protrusions are engaged to allow the upper pressed block and the lower pressed block to be engaged vertically; and the locking member is a locking bolt, and the locking bolt passes through the through hole and is screwed into the threaded hole.
